# EUROPEAN PATENT APPLICATION

(11) **EP 2 605 120 A2**
(43) Date of publication of application: **19.06.2013**
(21) Application number: 12190778.6
(22) Date of filing: 31.10.2012
(51) Int. Cl.: G06F 3/06

(54) **Allocation device, allocation method and storage device**

(30) Priority: 12.12.2011 JP 2011271055
(71) Applicant: FUJITSU LIMITED, Kawasaki-shi, Kanagawa 211-8588 (JP)
(72) Inventor: Suzuki, Ryosuke, Kanagawa, 211-8588 (JP)
(74) Representative: HOFFMANN EITLE

(57) **Abstract**

An allocation device includes a processor which determines an allocation of partial memory spaces to physical memory spaces included in each of N number of physical memory devices when number of the physical memory devices is changed, the physical memory space allocation determined based on one or more sets of N partial memory spaces, each partial memory space in a set of N partial memory spaces allocated to each of the N physical memory devices.

## Description

### FIELD

The embodiments discussed herein are related to allocation devices, allocation methods, and storage devices.

### BACKGROUND

In a storage device that stores a large volume of data, a storage virtualization technology that uses one or a plurality of memory devices, such as hard disk drives (HDDs), as a shared virtual storage (storage pool) is well-known.

The storage device dynamically allocates memory spaces of the storage pool to a virtual memory space (virtual volume) having a capacity that meets a request from a host apparatus. For example, a plurality of memory space groups (ECC groups) defined in the storage pool is allocated to the virtual volume.

When the memory spaces are dynamically allocated memory spaces from the plurality of groups to the virtual volume, there is a well-known technology that arranges the memory spaces of the plurality of groups so as that the equal number of the memory spaces is used from each group to balance the groups evenly. By evenly arranging the numbers of the memory spaces in the plurality of groups, it is possible to control a reduction of response performance to the host apparatus due to concentrations of accesses to certain groups.

Japanese Laid-open Patent Publication No. 2008-234158 discusses a related art.

### SUMMARY

According to an aspect of the embodiment, an allocation device includes a processor which determines an allocation of partial memory spaces to physical memory spaces included in each of N number of physical memory devices when number of the physical memory devices is changed, the physical memory space allocation determined based on one or more sets of N partial memory spaces, each partial memory space in a set of N partial memory spaces allocated to each of the N physical memory devices.

### BRIEF DESCRIPTION OF DRAWINGS

FIG. 1 illustrates a storage device according to a first embodiment;

FIG. 2 illustrates a storage system according to a second embodiment;

FIG. 3 illustrates a hardware configuration example of a CM;

FIG. 4 illustrates a configuration example of process functions of a CM;

FIG. 5 illustrates an example of a storage pool configuration information table;

FIG. 6 illustrates an example of a bitmap;

FIG. 7 illustrates an example of a virtual disk configuration information table;

FIG. 8 illustrates an example of a copy management table;

FIG. 9 illustrates an example of an extent management table;

FIG. 10 illustrates an example of a data migration process;

FIG. 11 illustrates another example of a data migration process;

FIG. 12 illustrates still another example of a data migration process;

FIG. 13 illustrates an example of an updated storage pool configuration information table;

FIG. 14 illustrates an example of a partitioned virtual disk configuration information table;

FIGs. 15A and 15B illustrate examples of an extent management table for a first partition according to the embodiment; and

FIG. 16 illustrates an example of a process result according to the embodiment.

### DESCRIPTION OF EMBODIMENTS

At first, a case is considered, where memory spaces, of memory devices included in a storage pool, which have been allocated to a virtual memory are rearranged when a memory device is added to the storage pool during an Operation of a storage device including the storage pool. In this case, if the memory spaces, of memory device including the added memory device are allocated to the virtual volume in such a way that the number of the memory spaces of each memory device is identical to each other among the memory devices including the added memory device, the following operations may be performed, for example: (1) generating a new virtual memory allocated to the added memory device; (2) copying data from the virtual volume that serves as a copy source to the new virtual volume; and (3) returning the copy source virtual volume to the storage pool.

However, when the above operations (1)-(3) are being performed, the copying in the operation (2) is to copy all data from the virtual volume to the new virtual volume. Thus, efficiency of the above-discussed allocation may decrease.

Although the case where the memory device is added during an operation is described above, in the similar manner, efficiency of a case where a memory device is removed from the storage pool during an operation may decrease.

According to embodiments which will be described below, when the number of physical memory devices to be allocated to virtual memory spaces is changed, an allocation process that allocates physical memory spaces of post-change physical memory devices to the virtual memory spaces is performed efficiently.

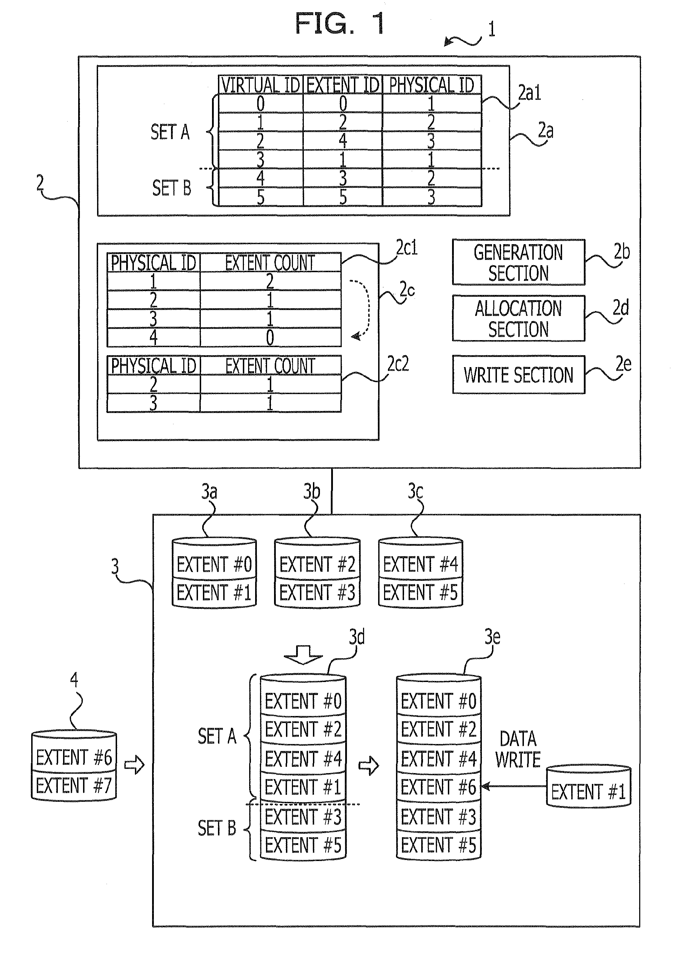

FIG. 1 is a diagram illustrating a storage device according to the first embodiment.

The storage device 1 according to the first embodiment includes a controller 2 and a storage pool 3. The controller 2 and the storage pool 3 are coupled to each other via a network.

A memory space of the storage pool 3 is controlled for a centralized control of storage capacities in the storage device 1. A plurality of physical memory devices 3a, 3b, 3c are arranged in the storage pool 3. Each of the physical memory devices 3a, 3b, 3c may be, for example, a nonvolatile memory device, such as a HDD, a Solid State Drive (SSD), etc. The physical memory devices 3a, 3b, 3c store data.

The controller 2 controls memory spaces in each of the physical memory device 3a, 3b, 3c based on units, which is called "extent", for a data management. In the embodiment, the size of each extent is set to 1 GB for example. IDs (hereinafter, referred to as "extent ID") are set to identify extents in each of the physical memory device 3a, 3b, 3c. In FIG. 1, the extent, the extent ID of which is X, is illustrated as "extent #X".

In the storage pool 3, a virtual memory 3d is generated. Virtual memory spaces of the virtual memory 3d are dispersively allocated to the memory spaces, which are the extents, of the physical memory devices 3a, 3b, 3cvirtual memory. Each extent in the virtual memory 3d is an example of a partial virtual memory space. The virtual memory 3d is generated by the controller 2, for example. The virtual memory 3d is divided into a plurality of memory spaces based on the size of the extent. The size of the extent may be set to a striping size.

The controller 2 performs an access operation through the network when a data access request to the virtual memory 3d is obtained. The data access request to the virtual memory 3d may be received, for example, from another information processing apparatus (for example, server apparatus) which is not illustrated in the drawing through the network.

The controller 2 includes a management section 2a, a generation section 2b, a memory section 2c, an allocation section 2d, and a write section 2e. Note that the generation section 2b, the allocation section 2d, and the write section 2e may be actualized by a Central Processing Unit (CPU) which executes a procedure based on a program stored in a Random Access Memory (RAM), a HDD, or the like included in the controller 2. Furthermore, the management section 2a and the memory section 2c may be actualized by a Random Access Memory (RAM), a HDD, or the like included in the controller 2.

The management section 2a stores a table 2a1. The table 2a1 records relationships among the virtual memory 3d, the physical memory devices 3a, 3b, 3c, and the extents. The table 2a1 is provided with columns for a virtual ID, the extent ID, and a physical ID. Laterally aligned plural pieces of information are associated with each other.

In the column of the virtual ID, virtual IDs for identifying locations of the extents in the virtual memory 3d are entered. For example, the virtual IDs = 0, 1, ... are sequentially set to the extents from a extent illustrated in a top of the extents included in the virtual memory 3d in FIG.1 to a extent illustrated in a bottom of the extents included in the virtual memory 3d in FIG.1. In the column of the extent ID, extent IDs of the extents that correspond to the locations identified by the virtual IDs are entered. In the column of the physical ID, physical IDs for identifying physical memory devices including the extents identified by the extent IDs are entered. A physical ID of the physical memory device 3a is "1", a physical ID of the physical memory device 3b is "2", and a physical ID of the physical memory device 3c is "3", for example.

According to the table 2a1, by referring to records in the first line of the table 2a1, for example, it is apparent that the extent corresponding to the extent ID = 0 included in the physical memory device 3a is arranged in the position, of the virtual memory 3d, corresponding to the virtual ID =0.

When a physical memory device 4 is newly added to the storage pool 3, a virtual memory 3e is generated in the storage pool 3. Virtual memory spaces of the virtual memory 3e are dispersively allocated to the memory spaces of the physical memory devices 3a, 3b, 3c and the physical memory device 4 which is newly added by the controller 2. The controller 2 performs the following load distribution process when the virtual memory 3e is generated. The following load distribution process decreases a concentration of accesses to any one of the physical memory devices 3a, 3b, 3c, 4 which relate to the virtual memory 3e generated.

The load distribution process that is being performed by the controller 2 is described below.

The controller 2 separates a memory space of the newly added physical memory device 4 into extents, each of which has the same size as those of the extents corresponding to the extent IDs = 0-5. The extents newly generated are assigned the extent IDs = 6, 7.

The generation section 2b generates sets within the virtual memory 3d that is generated before a reconfiguration. The sets A include, if , the same numbers of the extents as the number of the physical memory devices 3a, 3b, 3c, 4 relating to the virtual memory 3e that is generated after the reconfiguration. For example, the generation section 2b refers to the table 2a1 and forms a set A including four extents corresponding to four extent IDs = 0, 2, 4, 1, the number of which is equal to the number of the physical memory devices 3a, 3b, 3c, 4 relating to the post-reconfiguration virtual memory 3e. As illustrated in FIG.1, there are two extents remained after forming the set A. Thus, the generation section 2b generates a set B by collecting the remaining extents. Namely, the set B includes the extents corresponding to the extent IDs = 3, 5.

The generation section 2b generates tables 2c1 and 2c2 by counting the number of extents included in the sets A and B for every physical memory device, and stores them in the memory section 2c. For example, the generation section 2b refers to the table 2a1, and generates the tables 2c1 and 2c2 by counting the number of physical IDs for each of the sets A and B. The table 2c1 relates to the set A and the table 2c2 relates to the set B. For example, the table 2c1 with respect to the set A illustrates that there is two extents in the physical memory device 3a, which is identified by the physical ID = 1.

The allocation section 2d performs a process to set the number of the extents included in the set, which relate tore the tables 2cstored in the memory section 2c, so as that one extent is selected from each of every physical memory devices.

For example, the allocation section 2d determines whether or not two or more extents from the same physical memory device are included in the set A, by using the table 2c1. Referring to the table 2c1, an extent count that corresponds to the physical ID = 1 is two. Thus, the allocation section 2d determines that two extents included in the physical memory device 3a are included in the set A. Thus, two or more extents included in the set A, the allocation section 2d retains one extent corresponding to the extent ID = 0, in the physical memory device 3a, in the set A and releases the remaining extent corresponding to the extent ID = 1, in the physical memory device 3a, by cancelling an allocation relation with the virtual memory 3d. The allocation section 2d newly allocates an extent corresponding to the extent ID = 6 to the set A in the virtual memory 3d. The newly allocated extent is included in the physical memory device 4 from which no extent is included in the set A. Note that it may be arbitrarily decided as to which one of the extents corresponding to the extent IDs = 0, 1 is to be retained to keep the allocation relation with the virtual memory 3d. It may be arbitrarily decided as to which one of the extents corresponding to the extent IDs = 6, 7 of the physical memory device 4 is to be newly allocated to the set A in the virtual memory 3d.

On the other hand, the extent counts for the physical IDs =2, 3 are both one. The extent corresponding to the extent ID = 2 and the extent corresponding to the extent ID = 4 satisfy a condition such that one extent is selected from each of every physical memory devices in the set A. Thus, the allocation relation with the virtual memory 3d is kept for the extent corresponding to the extent ID = 2 and the extent corresponding to the extent ID = 4. As a result, the extent corresponding to the extent ID = 2 and the extent corresponding to the extent ID = 4 remain in the set A.

The allocation section 2d determines whether or not two or more extents from the same physical memory device are included in the set B, by using the table 2c2. Referring to the table 2c2, it is apparent that not more than one extent from the same physical memory device is arranged. Thus, the allocation section 2d retains the allocation relations of the extent corresponding to the extent ID = 3 and the extent corresponding to the extent ID = 5 with the virtual memory 3d. As a result, the extent corresponding to the extent ID = 3 and the extent corresponding to the extent ID = 5 remain in the set B.

The write section 2e writes data stored in the extent corresponding to the extent ID =1 to the extent corresponding to the extent ID = 6 of the physical memory device 4. Due to the execution of the process by the allocation section 2d, the extent corresponding to the extent ID = 1 is not included in the set A and is replaced by the extent corresponding to the extent ID = 6. The write section 2e does not move data for the extent corresponding to the extent ID = 0 and the extent corresponding to the extent ID = 2 that remain in the set A even after the execution of the process by the allocation section 2d. The virtual memory 3e is thus generated by the foregoing extent allocation process for load distribution.

A write process may be omitted when no data is stored in the extent corresponding to the extent ID = 1. A process load may decrease by such an arrangement.

According to this storage device 1, the set A including four extents, the number of which is equal to the number of the physical memory devices 3a, 3b, 3c, 4, and the set B including the remaining extents are generated. The extents included in each of the sets A and B thus generated are included in mutually different physical memory devices, thereby generating the virtual memory 3e. The possibility of having an I/O access concentration at a specific physical memory device may reduce, compared to I/O processes based on the virtual memory 3d, by performing I/O processes using the virtual memory 3e. According to a method for generating the virtual memory 3e of the present embodiment, the allocation process that dispersively allocates the physical memory spaces of post-change physical memory devices to a virtual memory space may be efficiently performed. This is because, with regard to the physical memory device 3a from which two or more of the extents are included in the set A, some of the extents are replaced and other extents on which no replacement is made are retained to keep the allocation relations.

When there is data in the extent corresponding to the extent ID = 1, that data stored in the extent corresponding to the extent ID = 1 is written to the extent corresponding to the extent ID = 6 of the physical memory device 4. No data write process may be performed for the extents corresponding to the extent IDs = 0, 2, 4. Thus, a data volume to be moved may be reduced compared to a case where all data is copied. Thus, extent process time may be reduced.

The write section 2e determines whether or not there is data in the extent corresponding to the extent ID = 1, which is not included in the set A by the execution of the process. When there is no data, A writing from the extent corresponding to the extent ID =1 to the extent corresponding to the extent ID = 6 of the physical memory device 4 may be omitted. Omitting the writing may alleviate the process load.

In the present embodiment, the process of the controller 2 is described for the case where the physical memory device 4 is newly added to the storage pool 3. However, the process method of the present embodiment may also be applicable to a case where one of the physical memory devices 3a, 3b, 3c is removed from the storage pool 3.

In the present embodiment, the sets A and B of the generated virtual memory 3e are each configured from the extents of mutually different physical memory devices. However, the configuration is not limited to the foregoing example, and the sets of the generated virtual memory may also be configured from extents of mutually different Redundant Array of Independent Disks (RAID) groups. In that case, a plurality of the extents may be configured by using each RAID group as a unit.

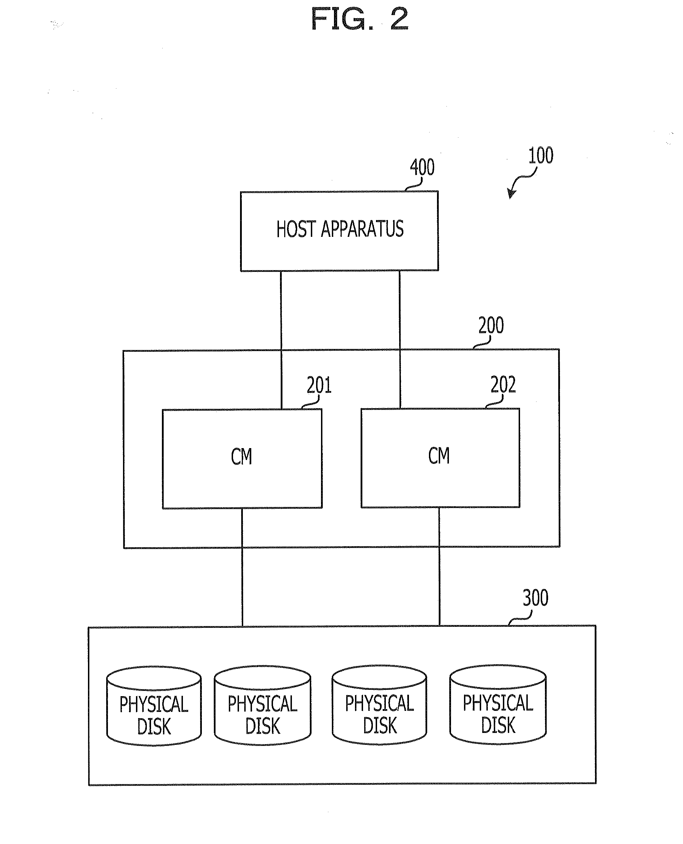

FIG. 2 is a block diagram illustrating a storage system according to the second embodiment.

FIG. 2 is the diagram illustrating an overall configuration example of the storage system according to the second embodiment. A storage device 100 illustrated in FIG. 2 includes a Controller Enclosure (CE) 200 and a Drive Enclosure (DE) 300. Furthermore, the CE 200 is coupled to a host apparatus 400.

The CE 200 includes Controller Modules (CMs) 201 and 202. The CMs 201 and 202 each read and write data from and to memory devices in the DE 300 in response to In/Out (I/O) requests from the host apparatus 400. The CMs 201 and 202 manages physical memory spaces actualized by the memory devices in the DE 300 by RAID, and controls accesses to these physical memory spaces.

The CMs 201 and 202 are coupled to each other through a router or the like, for example. The CE 200 may be provided with one CM, or three or more CMs. Note that, having a plurality of CMs makes an access control system for the DE 300 redundant and improves reliability of an access control process.

The DE300 includes a plurality of the memory devices that serve as access targets from the CMs 201 and 202. The DE 300 of the present embodiment is a disk array apparatus including physical disks that are nonvolatile memory devices, such as HDDs, SSDs, etc., as the memory devices. Furthermore, the CE 200 may be coupled to a plurality of the DEs 300.

In response to an operation (e.g. a user operation), the host apparatus 400 sends a request to the CM 201, 202 to access physical disks in the DE 300. In response to the operation, the host apparatus 400 may, for example, read data from the physical disk in the DE 300 or write data to the physical disk in the DE 300 through one of the CMs 201 and 202.

Note that the CMs 201 and 202 in the CE 200 have similar configurations and perform similar operations. Thus, the CM 201 is described below, and a description with respect to the CM 202 is omitted.

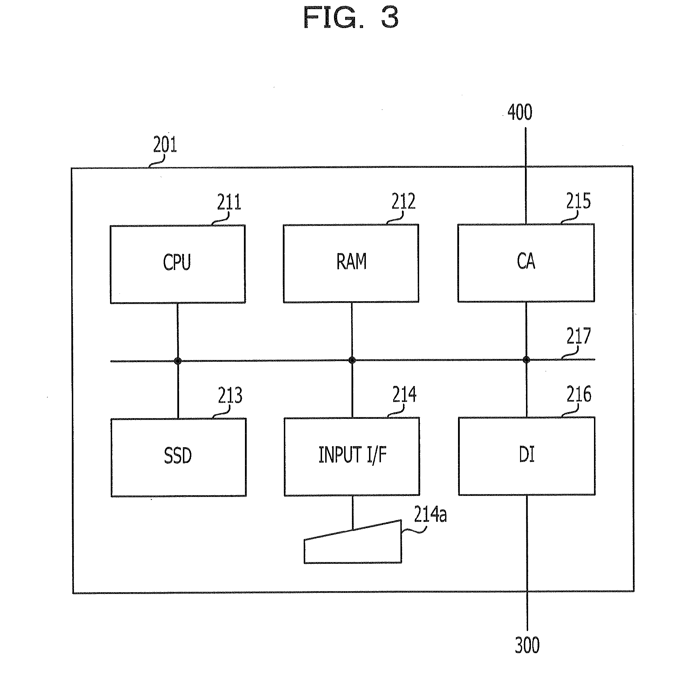

FIG. 3 is a diagram illustrating a hardware configuration example of the CM 201.

In the CM 201, a CPU 211 controls a whole device. The CPU 211 is coupled to a RAM 212 and a plurality of peripheral devices through a bus 217. The RAM 212 is used as a primary memory device of the CM 201, and temporarily stores at least part of programs to be executed by the CPU 211 and various data to be used in process Operation OP by the programs.

The CPU 211 is coupled to the peripheral devices such as, for example, a SSD 213, an input interface (I/F) 214, a Channel Adapter (CA) 215, and a Device Interface (DI) 216.

The SSD 213 is used as a secondary memory device of the CM 201, and stores programs to be executed by the CPU 211, various data to be used for their executions, etc. As the secondary memory device, other types of nonvolatile memory devices such as, for example, a HDD, etc. may also be used.

The input I/F 214 is coupled to an input device 214a including operation keys, etc. The input I/F 214 outputs signals to the CPU 211 in response to operation inputs performed on the input device 214a.

The CA 215 performs an interface process that transmits and receives data between the host apparatus 400 and the CM 201. The CA 215 and the host apparatus 400 communicate to each other in compliance with, for example, Fiber Channel (FC) standards.

The DI 216 performs an interface process that transmits and receives data between the DE 300 and the CM 201. The DI 216 and the DE 300 communicate to each other in compliance with, for example, Serial Attached Small Computer System Interface (SAS) standards.

The foregoing hardware configuration enables to implement process functions of the embodiment. The storage device 100 having the hardware configuration as illustrated in FIG. 2 is provided with the following functions.

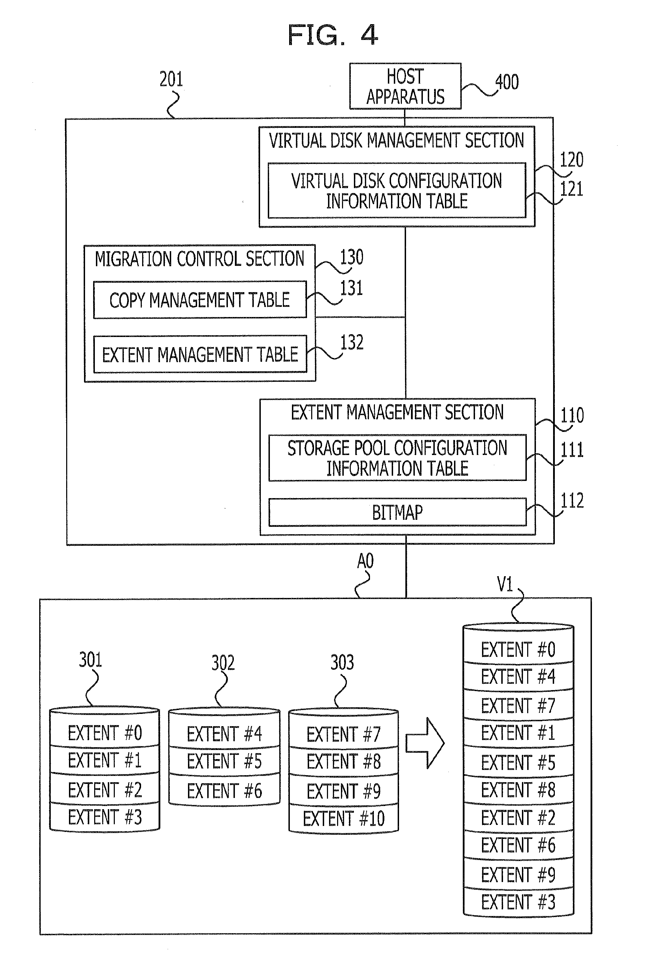

FIG. 4 is a block diagram illustrating a configuration example of process functions of the CM 201.

The CM 201 includes an extent management section 110, a virtual disk management section 120, and a migration control section 130. Processes of the extent management section 110, the virtual disk management section 120, and the migration control section 130 are actualized, for example, by causing the CPU 211 included in the CM 201 to execute programs. The migration control section 130 is an example of a generation section, an allocation section, and a write section.

Furthermore, memory devices of the CM 201 store a storage pool configuration information table 111, a bitmap 112, a virtual disk configuration information table 121, a copy management table 131, and an extent management table 132. These tables may be stored in, for example, the RAM 212 and/or the SSD 213. In FIG. 4, for convenience of description, these tables are illustrated in corresponding functional blocks.

A storage pool A0 illustrated in FIG. 4 is a physical memory space actualized by physical disks in the DE 300.

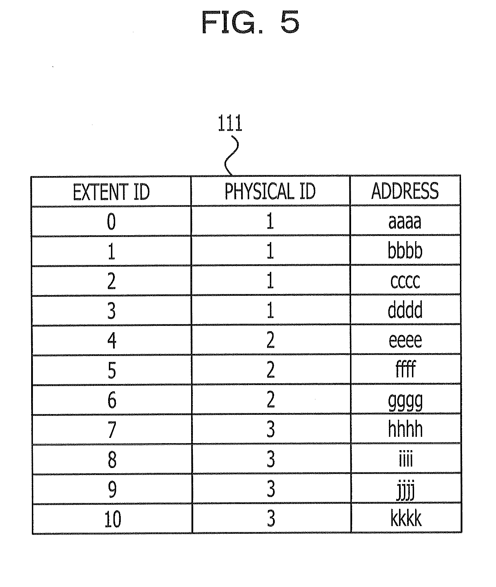

In the storage pool A0, a virtual disk V1 is generated. The virtual disk V1 is a logical volume available for use by users, and a memory space thereof is provided by at least part of physical disks in the DE 300. In an example illustrated in FIG. 5, physical disks 301, 302, 303 are allocated to the memory space of the virtual disk V1. The physical disks 301, 302, 303 of the embodiment have physical memory capacities of 4GB, 3GB, 4GB, respectively.

The extent management section 110 divides physical memory capacities of the physical disks 301, 302, 303 into units of a management size of a certain capacity for performing a management process. Below, the management size is referred to as "extent". In the present embodiment, the size of extent is set to 1 GB, for example. The extent management section 110 sets IDs for corresponding extents. In the drawing, the extent, the ID of which is X, is illustrated as "extent #X".

FIG. 5 is a diagram illustrating an example of the storage pool configuration information table 111. The storage pool configuration information table 111 is provided with columns for the extent ID, a physical disk ID, and an address. Laterally aligned plural pieces of information are associated with each other.

In the column of extent IDs, IDs for identifying the extents are entered. In the column of physical IDs, IDs for identifying the physical disks, which include the extents, are entered.

In the column of addresses, addresses of the corresponding extents (for example, Logical Block Address (LBA), etc.) are entered. Returning to FIG. 4, the description continues.

The virtual disk V1 includes the extents corresponding to the extent IDs = 0-3 of the physical disk 301, the extents corresponding to the extent IDs = 4-6 of the physical disk 302, and the extents corresponding to the extent IDs = 7-9 of the physical disk 303. The extent corresponding to the extent ID = 10 of the physical disk 303 is a physical memory space that is not used. As a result, the memory capacity of the virtual disk V1 is 10 GB.

The extents are allocated to the virtual disk V1 so as that accesses are uniformly distributed among the physical disks 301, 302, 303. The extents allocated to the virtual disk V1 are recorded in the virtual disk configuration information table 121.

The extent management section 110 accesses the virtual disk V1 in response to a request from the virtual disk management section 120. When accessing the virtual disk V1, the extent management section 110 performs an access control based on setup information (RAID level, the number of disks configuring RAID, etc.) regarding a RAID, which is set for access destination spaces.

For example, when the extent management section 110 receives a data write request from the virtual disk management section 120, the extent management section 110 performs a write process so as to create redundant data based on the setup information regarding the RAID.

The extent management section 110 manages data access information by using the bitmap 112.

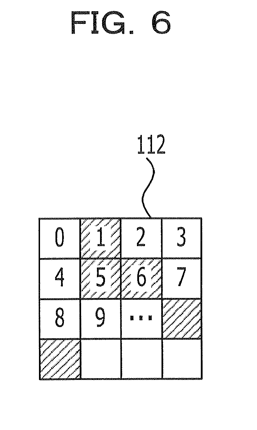

FIG. 6 is a diagram illustrating an example of the bitmap 112.

Each bit of the bitmap 112 corresponds to one extent. A bit is colored when an extent corresponding to this bit receives a data access. A colored state indicates that the value of bit is "one". The bitmap 112 illustrated in FIG. 6 indicates that there are data accesses to the extents corresponding to the extent IDs = 1, 5, 6. The bitmap 112 is used in a data migration process to be performed by the migration control section 130, which will be described below. The migration control section 130 determines, for example, that data exists in the extent to which the data access is performed.

Returning to FIG. 4, the description continues.

The virtual disk management section 120 receives I/O requests for the virtual disk V1 from the host apparatus 400. A user may be able to read and write data from and to the virtual disk V1 by sending the I/O requests to the CM 201 from the host apparatus 400.

When the virtual disk management section 120 receives a write request for the virtual disk V1 from the host apparatus 400, the virtual disk management section 120 acquires the extent ID of the extent to which data is written from the virtual disk configuration information table 121. The virtual disk management section 120 notifies the extent management section 110 of the extent ID and requests data writing.

When the virtual disk management section 120 receives a read request for the virtual disk V1 from the host apparatus 400, the virtual disk management section 120 refers to the storage pool configuration information table 111 and identifies the address that corresponds to a read space. The virtual disk management section 120 notifies the extent management section 110 of the address corresponding to the read space, to request data reading. When the extent management section 110 read data in response to the request, the virtual disk management section 120 sends the data thus read to the host apparatus 400.

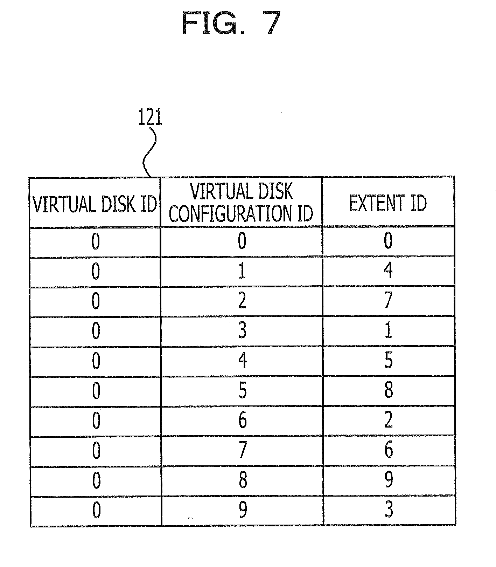

The virtual disk management section 120 includes the virtual disk configuration information table 121 for managing information regarding the virtual disk V1.FIG. 7 is a diagram illustrating an example of the virtual disk configuration information table 121.

The virtual disk configuration information table 121 is provided with columns for a virtual disk ID, a virtual disk configuration ID, and the extent ID. Laterally aligned plural pieces of information are associated with each other.

In the column of virtual disk IDs, IDs that identify the virtual disks are entered. The same ID indicates that a single virtual disk is configured. For example, the extents configuring the virtual disk V illustrated in FIG. 4 have a common ID "0".

In the column of virtual disk configuration IDs, IDs for managing the extents in the virtual disk V1 are entered.

In the column of extent IDs, the extent IDs are entered.

When at least one physical disk is newly added to the storage pool A0 or at least one of the physical disks configuring the virtual disk V1 is removed from the storage pool A0, the migration control section 130 performs the data migration process so as that the numbers of the extents of the respective physical disks configuring a post-reconfiguration virtual disk that is generated after a reconfiguration are equalized. For example, the migration control section 130 divides the extents of the virtual disk V1 into a plurality of partitions in such a way that at least one of the partitions includes the same number of the extents as that of physical disks of the post-reconfiguration virtual disk. Furthermore, when at least one physical disk is newly added to the storage pool A0, the migration control section 130 performs the process in such a way that, in each of the partitions generated, when more than one extent from the same physical disk is included, a second or more extents are moved to other physical disks from which no extent is arranged in that partition so as that the extent count of each physical disk becomes one.

When at least one physical disk is removed from the storage pool A0 or the virtual disk V1, the migration control section 130 moves, in each of the partitions generated, the extents of the physical disk to be removed to other physical disks from which no extent is arranged in that partition so as that the extent count corresponding to the physical disk to be removed becomes zero. This data migration process may enable to avoid the access concentration to a certain one of the physical disks configuring the post-reconfiguration virtual disk.

This migration control section 130 generates the copy management table 131 and the extent management table 132 for each partition in the data migration process. The extent management table 132 is an example of the table to be stored in a memory section.

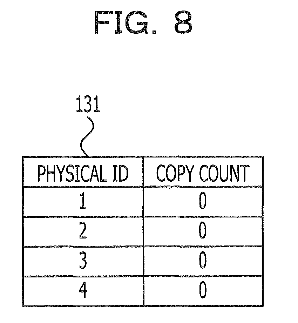

FIG. 8 is a diagram illustrating an example of the copy management table 131.

The copy management table 131 is provided with columns for the physical disk ID and a copy count. Laterally aligned plural pieces of information are associated with each other.

In the column of physical disk IDs, IDs that identify physical disks, which configure the post-reconfiguration virtual disk in the data migration process, are entered. For example, in the data migration process, when the number of the physical disks configuring the virtual disk V1 is changed from three to four, IDs for identifying four physical disks that configure the post-reconfiguration virtual disk are entered in the column of physical disk IDs.

In the column of copy counts, values indicating the numbers of data copying performed on the respective physical disks identified by the physical disk IDs during the data migration process are entered.

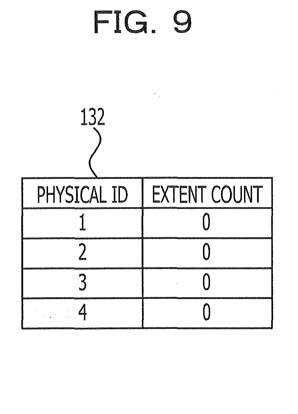

FIG. 9 illustrates an example of the extent management table 132.

The extent management table 132 is provided with columns for the physical disk ID and the extent count.

Laterally aligned plural pieces of information are associated with each other. In the column of physical disk IDs, IDs that identify the physical disks, which configure the post-reconfiguration virtual disk in the data migration process, are entered. For example, in the data migration process, when the number of the physical disks configuring the virtual disk V1 is changed from three to four, IDs for identifying four physical disks that configure the post-reconfiguration virtual disk are entered in the column of physical disk IDs.

In the column of extent counts, the numbers of the extents arranged in the partition generated, which are included in the respective physical disks identified by the physical disk IDs, are entered.

Next, the data migration process performed by the migration control section 130 is described by using flowcharts.

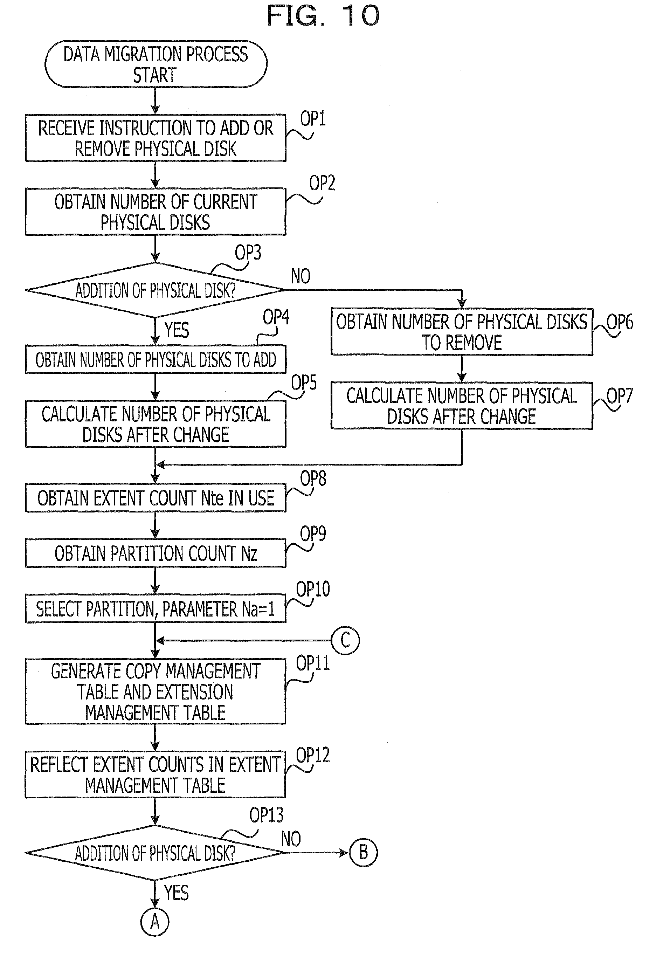

FIG. 10, FIG. 11, and FIG. 12 are flowcharts illustrating an example of the data migration process.

[Operation OP1] The migration control section 130 receives an instruction to add at least one physical disk or an instruction to remove at least one physical disk. Then, the process proceeds to an operation OP2.

[Operation OP2] The migration control section 130 refers to the column of physical disk IDs of the storage pool configuration information table 111, and obtains the number of the physical disks that configure the current virtual disk V1 (before an addition of at least one physical disk or before removal of at least one physical disk). Then, the process proceeds to an operation OP3.

[Operation OP3] The migration control disk 130 determines whether the instruction received in the Operation OP1 is an instruction to add at least one physical disk or an instruction to remove at least one physical disk. When the instruction received is an instruction to add at least one physical disk (Yes in the Operation OP3), the process proceeds to an operation OP4. When the instruction received is not an instruction to add at least one physical disk, namely, when the instruction received is an instruction to remove at least one physical disk (No in the Operation OP3), the process proceeds to an operation OP6.

[Operation OP4] The migration control section 130 obtains the number of the at least one physical disk to be added, which is included in a received instruction to add at least one physical disk. Then, the process proceeds to an operation OP5.

[Operation OP5] The migration control section 130 calculates the number of the physical disks that configure a post-reconfiguration virtual disk that is generated after a reconfiguration by adding the at least one physical disk. Then, the process proceeds to an operation OP8.

[Operation OP6] The migration control section 130 obtains the number of the at least one physical disk to be removed, which is included in a received instruction to remove at least one physical disk. Then, the process proceeds to an operation OP7.

[Operation OP7] The migration control section 130 calculates the number of the physical disks that configure the post-reconfiguration virtual disk by removing the at least one physical disk. Then, the process proceeds to an operation OP8.

[Operation OP8] The migration control section 130 refers to the column of virtual disk configuration IDs of the virtual disk configuration information table 121, and obtains the extent count "Nte" of the extents in use by the virtual disk V1. Then, the process proceeds to an operation OP9.

[Operation OP9] The migration control section 130 divides the extent count obtained in the Operation OP8 by the number of the physical disks that configure the post-reconfiguration virtual disk, which is calculated in the Operation OP5 or Operation OP7. Then, the process proceeds to an operation OP10. The value obtained by this division will be referred to as "partition count" hereinafter. The partition count serves as an indicator that indicates a level of averaging in the extent counts of the extents belonging to the physical disks. The partition count "Nz" may be expressed by Nz = Nte/Nn, where "Nn" is the number of the physical disks that configure the post-reconfiguration virtual disk, and "Nte" is the extent count by the Operation OP9. In the present embodiment, one decimal place is rounded up and the partition count Nz is expressed in integer.

[Operation OP10] The migration control section 130 selects the first partition (partition including the virtual disk configuration ID = 0) of the virtual disk configuration information table 121, which is divided by the partition count obtained in the Operation OP9. The partition selected by the migration control section 130 will be referred to as a "selected partition" below. Furthermore, the migration control section 130 sets Na = 1, where Na is a parameter for managing the selected partition. Then, the process proceeds to an operation OP11.

[Operation OP11] The migration control section 130 secures memory spaces in the RAM 212 for the copy management table 131 and the extent management table 132. Furthermore, the migration control section 130 generates in the memory spaces thus secured the copy management table 131 and the extent management table 132 in which the IDs of the physical disks that configure the post-reconfiguration virtual disk are reflected. Then, the process proceeds to an operation OP12.

[Operation OP12] The migration control section 130 reflects the number of the extents existing in the selected partition in the column of extent counts of the extent management table 132 generated in the Operation OP11. Then, the process proceeds to an operation OP13.

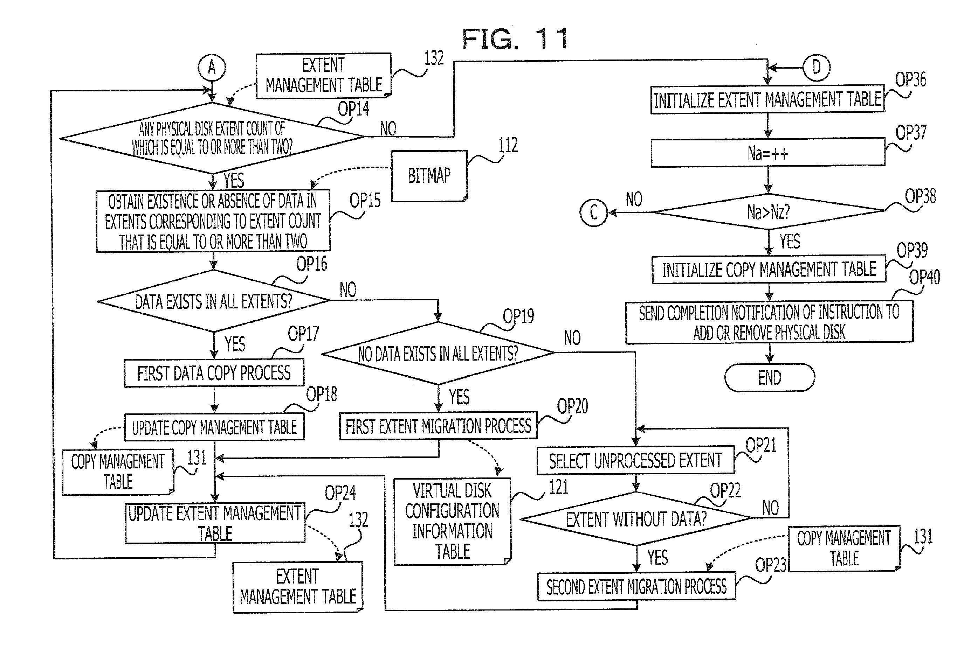

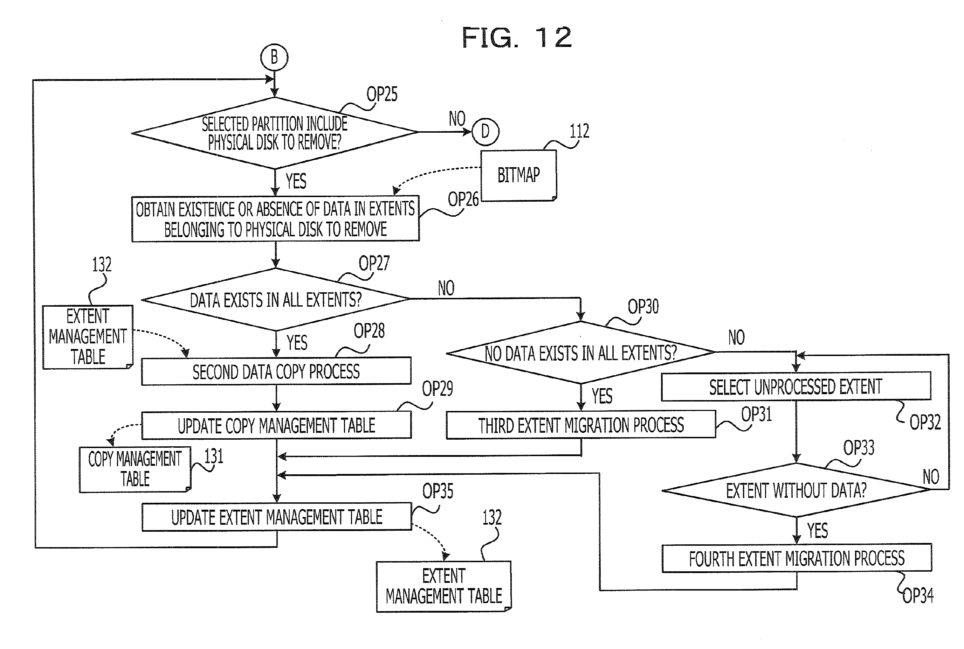

[Operation OP13] The migration control disk 130 determines whether the instruction received in the Operation OP1 is an instruction to add at least one physical disk or an instruction to remove at least one physical disk. When the instruction received is an instruction to add at least one physical disk (Yes in the Operation OP13), the process proceeds to an operation OP14 of FIG. 11. When the instruction received is not an instruction to add at least one physical disk, namely, when the instruction received is an instruction to remove at least one physical disk (No in the Operation OP13), the process proceeds to an operation OP25 of FIG. 12.

[Operation OP14] The migration control section 130 refers to the column of extent counts of the extent management table 132, and determines whether or not there is at least one physical disk in which the extent count for the extents included in a same physical disk in the selected partition is equal to or more than two. When there is at least one physical disk in which the extent count for the extents included in a same physical disk in the selected partition is equal to or more than two (Yes in the Operation OP14), the process proceeds to an operation OP15. When there is no physical disk in which the extent count for the extents included in a same physical disk in the selected partition is equal to or more than two (No in the Operation OP14), the process proceeds to an operation OP36.

[Operation OP15] The migration control section 130 refers to the bitmap 112, and obtains presence or absence of data in the extents that correspond to the extent count equal to or more than two, namely, the extents that belong to a same physical disk in the selected partition. Then, the process proceeds to an operation OP16.

[Operation OP16] The migration control section 130 determines whether or not data exists in all of the extents included in a same physical disk in the selected partition, based on the presence or absence of data obtained in the Operation OP14. When data exists in all of the extents included in a same physical disk in the selected partition (Yes in the Operation OP16), the process proceeds to an operation OP17. When data does not exist in all of the extents included in a same physical disk in the selected partition, namely, when data exists in at least one of the extents included in a same physical disk in the selected partition or when no data exists in all of the extents included in a same physical disk in the selected partition (No in the Operation OP16), the process proceeds to an operation OP19.

[Operation OP17] The migration control section 130 performs a first data copy process. For example, the migration control section 130 copies data from a second or more extents (for example, one or more extents corresponding to a larger value(s) of the extent ID) of the same physical disk in the selected partition to the extents included in the at least one physical disk which is added and arranged in the selected partition. Then, the process proceeds to an operation OP18.

[Operation OP18] The migration control section 130 updates the copy management table 131 by using a process result of the first data copy process. For example, the migration control section 130 increments the value in the column of copy counts for the physical disk including the extent to which the data copying is performed. Then, the process proceeds to an operation OP24.

[Operation OP19] The migration control section 130 determines whether or not no data exists in all of the extents included in a same physical disk in the selected partition. When no data exists in all of the extents included in a same physical disk in the selected partition (Yes in the Operation OP19), the process proceeds to an operation OP20. When data exists in at least one of the extents included in a same physical disk in the selected partition (No in the Operation OP19), the process proceeds to an operation OP21.

[Operation OP20] The migration control section 130 performs a first extent migration process. For example, the migration control section 130 identifies the extent IDs of a second or more extents (for example, one or more extents corresponding to a larger value(s) of the extent ID) of the same physical disk in the selected partition. Furthermore, the migration control section 130 overwrites the extent ID thus identified in the column of extent IDs of the virtual disk configuration information table 121 with the extent ID of the physical disk which is added and arranged in the same partition. Then, the process proceeds to an operation OP24.

[Operation OP21] The migration control section 130 selects one unprocessed extent (not processed in an operation OP22). Then, the process proceeds to an operation OP22.

[Operation OP22] The migration control section 130 determines whether or not the extent selected in the Operation OP21 is an extent in which no data exists. When the extent is an extent in which no data exists (Yes in the Operation OP22), the process proceeds to an operation OP23. When the extent is an extent in which data exists (No in the Operation OP22), the process proceeds to the Operation OP21 and continues to perform process Operation OP in the Operation OP21 and beyond.

[Operation OP23] The migration control section 130 performs a second extent migration process. For example, the migration control section 130 refers to the column of copy counts of the copy management table 131. Furthermore, the migration control section 130 replaces the extent which is determined as having no data in the Operation OP22 with an extent included in a physical disk that has the largest copy count. As a process, the migration control section 130 replaces the extent ID of the extent which is determined as having no data in the Operation OP22 in the virtual disk configuration information table 121 with the extent ID of an extent included in a physical disk that has the largest copy count. Then, the process proceeds to an operation OP24. The data accesses in the selected partition may be equalized by replacing the extent that is not associated with data copying, with that of the physical disk having a large copy count.

Alternatively, when all the values in the column of copy counts of the copy management table 131 are zero, the extent which is determined as having no data in the Operation OP22 may be replaced with an extent included in a newly added physical disk.

[Operation OP24] The migration control section 130 updates the extent management table 132 by reflecting the extent migration in the Operation OP20 or the Operation OP23 in the extent management table 132. Then, the process proceeds to the Operation OP14.

[Operation OP25] The migration control section 130 determines whether or not the selected partition includes a physical disk to be removed, which is designated by an instruction to remove at least one physical disk. When the selected partition includes a physical disk to be removed (Yes in the Operation OP25), the process proceeds to an operation OP26. When the selected partition does not include a physical disk to be removed (No in the Operation OP25), the process proceeds to an operation OP36.

[Operation OP26] The migration control section 130 refers to the bitmap 112, and obtains presence or absence of data in one or more extents included in the physical disk to be removed. Then, the process proceeds to an operation OP27.

[Operation OP27] The migration control section 130 determines whether or not data exists in all of the extents included in a same physical disk in the selected partition based on the presence or absence of data obtained in the Operation OP26. When data exists in all of the extents included in a same physical disk in the selected partition (Yes in the Operation OP27), the process proceeds to an operation OP28. When data does not exist in all of the extents included in a same physical disk in the selected partition, namely, when data exists in at least one of the extents included in a same physical disk in the selected partition or when no data exists in all of the extents included in a same physical disk in the selected partition (No in the Operation OP27), the process proceeds to an operation OP30.

[Operation OP28] The migration control section 130 performs a second data copy process. For example, the migration control section 130 refers to the column of extent counts of the extent management table 132. Furthermore, the migration control section 130 copies data stored in the extents of the physical disk to be removed to extents that are arranged in the selected partition and included in another physical disk, the extent count of which is zero. Then, the process proceeds to an operation OP29.

[Operation OP29] The migration control section 130 updates the copy management table 131 by using a process result of the second data copy process. For example, the migration control section 130 increments the value in the column of copy counts for the physical disk that serves as a destination of data copying performed in the Operation OP28. Then, the process proceeds to an operation OP35.

[Operation OP30] The migration control section 130 determines whether or not no data exists in all of the extents included in a same physical disk in the selected partition. When no data exists in all of the extents included in a same physical disk in the selected partition (Yes in the Operation OP30), the process proceeds to an operation OP31. When data exists in at least one of the extents included in a same physical disk in the selected partition (No in the Operation OP30), the process proceeds to an operation OP32.

[Operation OP31] The migration control section 130 performs a third extent migration process. For example, the migration control section 130 migrates the extent that is included in another physical disk, the extent count of which is zero, to the extent of the physical disk to be removed, both extents being arranged in a same partition. Then, the process proceeds to an operation OP35.

[Operation OP32] The migration control section 130 selects one unprocessed extent (not processed in an operation OP33). Then, the process proceeds to an operation OP33.

[Operation OP33] The migration control section 130 determines whether or not the extent selected in the Operation OP32 is an extent in which no data exists. When the extent is an extent in which no data exists (Yes in the Operation OP33), the process proceeds to an operation OP34. When the extent is an extent in which data exists (No in the Operation OP33), the process proceeds to the Operation OP32 and continues to perform process Operation OP in the Operation OP32 and beyond.

[Operation OP34] The migration control section 130 performs a fourth extent migration process. For example, the migration control section 130 refers to the column of copy counts of the copy management table 131. Furthermore, the migration control section 130 replaces the extent which is determined as having no data in the Operation OP33 with an extent included in a physical disk that has the largest copy count. As a process, the migration control section 130 replaces the extent ID of the extent which is determined as having no data in the Operation OP33 in the virtual disk configuration information table 121 with the extent ID of an extent included in a physical disk that has the largest copy count. Then, the process proceeds to an operation OP35.

Alternatively, when all the values of the copy counts of the copy management table 131 are zero, the extent which is determined as having no data in the Operation OP33 may be replaced with an extent included in a newly added physical disk.

[Operation OP35] The migration control section 130 updates the extent management table 132 by reflecting the extent migration in the Operation OP31 or the Operation OP34 in the extent management table 132. Then, the process proceeds to the Operation OP25.

[Operation OP36] The migration control section 130 initializes the extent management table 132. Then, the process proceeds to an operation OP37.

[Operation OP37] The migration control section 130 advances the selected partition to the next partition by incrementing the parameter Na. Then, the process proceeds to an operation OP38.

[Operation OP38] The migration control section 130 determines whether or not there is an unprocessed partition (not processed in the Operation OP S11-S35) by determining whether or not the parameter Na is larger than the partition count Nz. When the parameter Na is larger than the partition count Nz (Yes in the Operation OP38), the process proceeds to an operation OP39. When the parameter Na is equal to or less than the partition count Nz (No in the Operation OP38), the process proceeds to the Operation OP11 and continues to perform process Operation OP in the Operation OP11 and beyond.

[Operation OP39] The migration control section 130 initializes the copy management table 131. Then, the process proceeds to an operation OP40.

[Operation OP40] The migration control section 130 notifies the virtual disk management section 120 of a completion of the instruction to add at least one physical disk or the instruction to remove at least one physical disk. Then, the data migration process ends.

Next, an example of the data migration process is described along the Operation OP of the flowcharts illustrated in FIGs. 10-12. In the example, it is assumed that a single unit of a physical disk 304 (capacity: 3 GB) is added to the storage pool A0 illustrated in FIG. 4.

The migration control section 130 receives an instruction to add a physical disk.

Next, the migration control section 130 refers to the storage pool configuration information table 111, and obtains the current number of physical disks "No = 3".

Next, since this is the addition of a physical disk, the migration control section 130 obtains the number of the at least one physical disks to be added, "N+ = 1", and updates the storage pool configuration information table 111.

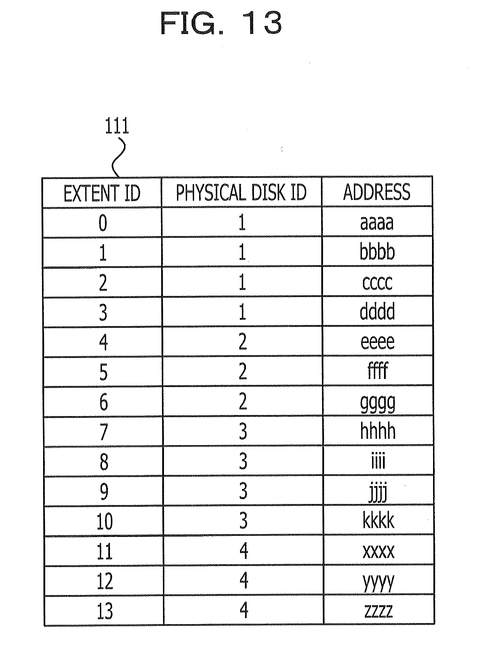

FIG. 13 is a diagram illustrating the storage pool configuration information table 111 thus updated.

The storage pool configuration information table 111 illustrated in FIG. 3 indicates that the physical disk ID of the physical disk 304 to be added is four, and the entire capacity of 3 GB of the physical disk 304 is allocated to extents.

Next, the migration control section 130 obtains the number of the physical disks that configure the post-reconfiguration virtual disk, "Nn = No + (N+) = 4".

Next, the migration control section 130 refers to the virtual disk configuration information table 121, and obtains the extent count for extents which are currently in use by the virtual disk V1, "Nte = 10".

Next, the migration control section 130 divides the extent count for the extents currently in use, "Nte = 10", by the number of the physical disks that configure the post-reconfiguration virtual disk, "Nn = 4". The partition count "Nz = 3" is obtained by rounding up to the whole number.

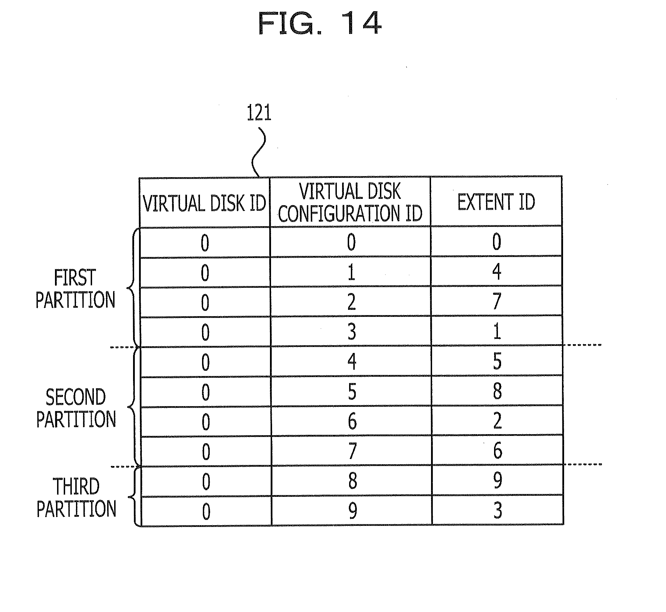

FIG. 14 illustrates an example of the virtual disk configuration information table 121 that is partitioned.

The first partition includes the virtual disk configuration IDs = 0-3; the second partition includes the virtual disk configuration IDs = 4-7; and the third partition includes the virtual disk configuration IDs = 8, 9.

First, the migration control section 130 performs the following process by setting the first partition as the selected partition.

Next, the migration control section 130 secures spaces for generating the copy management table 131 and the extent management table 132 in the RAM 212. Then, the copy management table 131 and the extent management table 132 for the first partition, both of which are initialized, are generated in the spaces thus secured. The copy management table 131 and the extent management table 132 thus generated in the example are identical to the copy management table 131 and the extent management table 132 illustrated in FIG. 8 and FIG. 9.

Next, the migration control section 130 obtains the extent counts of their respective physical disks 301, 302, 303, 304 in the first partition by counting the number of the physical disk IDs of the storage pool configuration information table 111, which correspond to the first partition of the virtual disk configuration information table 121. Then, the migration control section 130 stores the extent counts thus obtained in the extent management table 132.

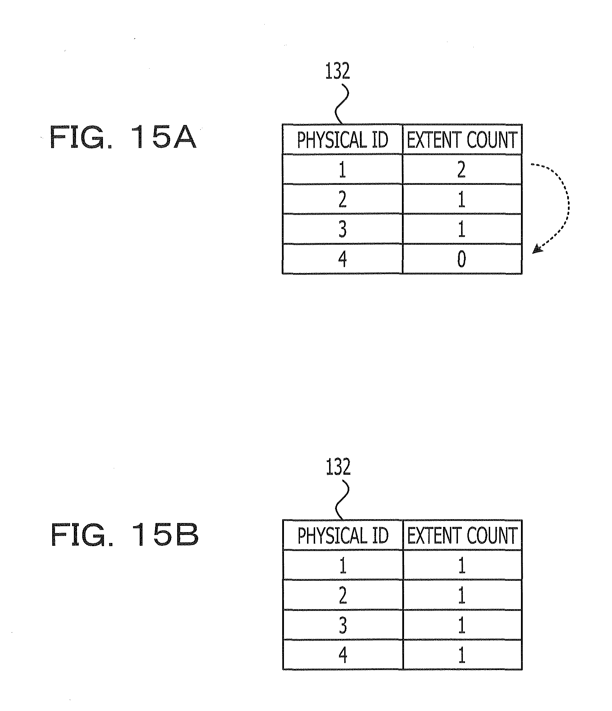

FIGs. 15A and 15B are diagrams illustrating the extent management table 132 of the first partition according to the embodiment.

FIG. 15A illustrates the extent management table 132 before the extent migration.

Next, since the instruction indicates the addition of the physical disk, the migration control section 130 refers to the column of extent counts of the extent management table 132 illustrated in FIG. 15A, and determines whether or not the extent count for the extents included in a same physical disk is equal to or more than two. In the example, the extent count for the physical disk ID = 1 is two. Thus, the migration control section 130 refers to the bitmap 112, and determines whether or not there is data in each of the extents corresponding to the extent IDs = 0, 1 included in the physical disk 301 corresponding to the physical disk ID = 1. In the example, the bitmap 112 illustrated in FIG. 6 is used as a basis for the determination. Referring to the bitmap 112 illustrated in FIG. 6, data exists in the extent corresponding to the extent ID = 1, namely, one of the extents. Thus, the migration control section 130 first processes the extent corresponding to the extent ID = 0. No data exists in the extent corresponding to the extent ID = 0. Thus, the migration control section 130 refers to the copy count of the copy management table 131. In the example, all the copy counts are zero. Thus, the extent ID = 0 of the virtual disk configuration information table 121 is replaced with the extent ID = 11 of the physical disk 304. Since no data exists in the extent corresponding to the extent ID = 0, the replacement of the extents is performed in this process step.

FIG. 15B is a diagram illustrating the extent management table 132 that is updated.

Next, the migration control section 130 refers to the column of extent counts of the extent management table 132, and determines whether or not the extent count for the extents included in a same physical disk is equal to or more than two. Since there is no physical disk the extent count of which is equal to or more than two, the migration control section 130 initializes the extent management table 132.

Next, the migration control section 130 sequentially takes the second partition and the third partition as the target partition to perform process Operation OP similar to those performed in the case with the first partition. Upon completing the process Operation OP for the third partition, the migration control section 130 initializes the copy management table 131. Next, the migration control section 130 notifies the virtual disk management section 120 of a completion of the instruction to add a physical disk. The virtual disk management section 120 performs controlling of disk accesses to the virtual disk generated after the data migration process, by using the virtual disk configuration information table 121 that is updated.

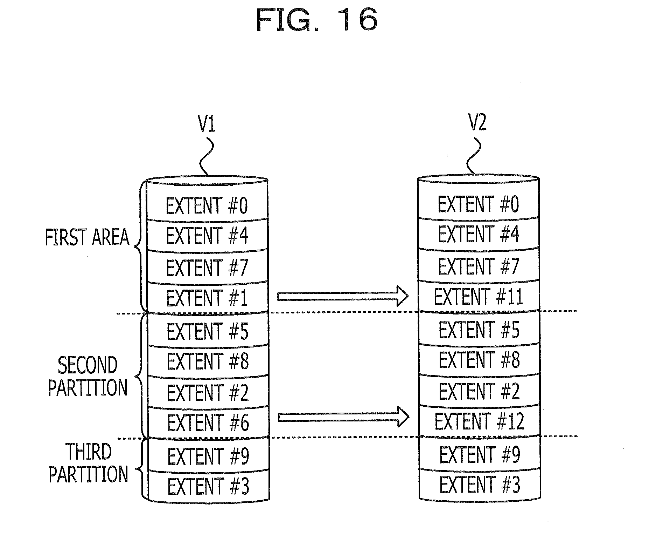

FIG. 16 is a diagram illustrating a process result according to the embodiment.

In the first partition of the virtual disk V1, there are the extents corresponding to the extent IDs =0, 1, which are included in the physical disk 301. In the first partition of the virtual disk V2 illustrating a result of performing the data migration process on the virtual disk V1, the extent corresponding to the extent ID = 1 included in the physical disk 301 is replaced by the extent corresponding to the extent ID = 11 included in the physical disk 304. Furthermore, in the second partition of the virtual disk V1, there are the extents corresponding to the extent IDs =5, 6, which are included in the physical disk 302. In response to this virtual disk V1, in the second partition of the virtual disk V2, the extent corresponding to the extent ID = 6 included in the physical disk 302 is replaced by the extent corresponding to the extent ID = 12 included in the physical disk 304. Furthermore, in the third partition of the virtual disk V1, there is no physical disk in which the extent count of the same physical disk is equal to or more than two. Thus, a configuration of the extents in the third partition of the virtual disk V2 is identical to a configuration the extents in the third partition of the virtual disk V1.

As described above, according to the storage device 100, the migration control section 130 creates the first partition, the second partition, and the third partition. The first partition and the second partition each include four extents, the number of which is equal to the number of the physical disks 301, 302, 303, and 304, and the third partition includes the remaining extents. Subsequently, the extents included in the first to third partition thus created are allocated to memory spaces of mutually different physical disks, generating the virtual disk V2. The CMs 201 and 202 may be able to reduce the possibility of having an I/O access concentration at a certain physical disk, compared to the virtual disk V1, by performing I/O processes using the virtual disk V2. Furthermore, in the data migration process of the present embodiment, some of the extents are replaced. Thus, the data volume to be moved may be reduced, for example, compared to the case where all data is copied.

The process Operation OP performed by the CM 201 may be distributed to the CMs 201 and 202 for distributed processing. For example, the CM 201 may perform the data migration process and the CM 202 may use its result for controlling disk accesses. The process Operation OP performed by the storage device 100 may be distributed to a plurality of devices for distributed processing.

So far the allocation device and the storage device are described based on the embodiments illustrated in the drawings. However, the embodiments are not limited thereto, and the configuration of each section may be replaced by any arbitrary configuration which performs a similar function. Furthermore, the embodiments may also be provided with any other additional configuration elements or Operation OP.

Furthermore, of the foregoing embodiments, any two or more configuration (characteristic) elements may be combined to form another embodiment.

The foregoing process functions may be actualized by a computer. In that case, a program that describes process details of the functions included in the controller 2 and the CMs 201, 202 may be provided and stored in the RAM 212 or the like. Executing the program by the computer enables to actualize the foregoing process functions on the computer. The program that describes the process details may be recorded in a computer-readable recording medium. The computer-readable recording medium may include a magnetic memory device, an optical disc, a magneto-optical recording medium, a semiconductor memory, or the like. The magnetic memory device may include a Hard Disk Drive (HDD), a Flexible Disk (FD), a magnetic tape, or the like. The optical disc may include a DVD, a DVD-RAM, a CD-ROM/RW, or the like. The magneto-optical recording medium may include a Magneto-Optical disk (MO) or the like.

In marketing of the program, for example, portable recording media such as DVDs, CD-ROMs, in which the program is recorded, may be marketed. The program may be stored in a memory device of a server computer, and transferred to other computers from the server computer through a network.

A computer that executes a program may, for example, stores the program recorded in a portable recording medium or transferred from a server computer in its own memory device. The computer may read the program from its own memory device, and performs process Operation OP according to the program. Alternatively, the computer may directly read the program from the portable recording medium, and performs process Operation OP according to the program. The computer may also sequentially perform process Operation OP according to a program segment every time it receives such a program segment transferred from a server computer that is coupled to the computer through a network.

Furthermore, at least part of the foregoing process functions may alternatively be actualized by an electronic circuit such as a Digital Signal Processor (DSP), an Application Specific Integrated Circuit (ASIC), a Programmable Logic Device (PLD), or the like.

## Claims

1. An allocation device comprising:
a processor which determines an allocation of partial memory spaces to physical memory spaces included in each of N number of physical memory devices when number of the physical memory devices is changed, the physical memory space allocation determined based on one or more sets of N partial memory spaces, each partial memory space in a set of N partial memory spaces allocated to each of the N physical memory devices.

2. The allocation device according to claim 1, wherein
when N is larger than existing number of physical memory devices and a plurality of partial memory spaces in a set of N partial memory spaces are allocated to same physical memory device, the processor allocates one of the plurality of partial memory spaces in the set of N partial memory spaces to a physical memory space included in a physical memory device to be added.

3. The allocation device according to claim 2, wherein
the processor omits a data migration process when no data exists in a partial memory space that is allocated to the physical memory space included in the physical memory device that is added.

4. The allocation device according to claim 1, wherein
when N is a smaller than existing number of physical memory devices, the processor moves data stored in a physical memory device to be removed to one of partial memory spaces in the set of N partial memory spaces included in the plurality of partial memory spaces of the N physical memory devices.

5. A method of causing a processor, comprising:
determing an allocation to physical memory spaces included in each of N physical memory devices when a number of the physical memory devices is changed;
generating one or more sets of N partial memory spaces, each partial memory space in a set of N partial memory spaces allocated to each of the N physical memory.

6. The allocation method according to claim 5, comprising:
when N is larger than existing number of physical memory devices and a plurality of partial memory spaces in a set of N partial memory spaces are allocated to same physical memory device, allocating one of the plurality of partial memory spaces in the set of N partial memory spaces to a physical memory space included in a physical memory device to be added.

7. The allocation method according to claim 6, comprising:
omitting a data migration process when no data exists in the partial virtual memory space that is allocated to a physical memory space included in a physical memory device that is added.

8. The allocation method according to claim 5, comprising:
when N is a smaller than existing number of physical memory devices, moving data stored in a physical memory device to be removed to one of partial memory spaces in the set of N partial memory spaces included in the plurality of partial memory spaces of the N physical memory devices.

9. A storage device comprising:
a plurality of physical memory devices; and
the processor according to claim 1.

10. The storage device according to claim 9, wherein
when N is larger than existing number of physical memory devices and a plurality of partial memory spaces in a set of N partial memory spaces are allocated to same physical memory device, the processor allocates one of the plurality of partial memory spaces in the set of N partial memory spaces to a physical memory space included in a physical memory device to be added.

11. The storage device according to claim 10, wherein
the processor omits a data migration process when no data exists in a partial memory space that is allocated to the physical memory space included in the physical memory device that is added.

12. The storage device according to claim 9, wherein
when N is a smaller than existing number of physical memory devices, the processor moves data stored in a physical memory device to be removed to one of partial memory spaces in the set of N partial memory spaces included in the plurality of partial memory spaces of the N physical memory devices.
